# EUROPÄISCHE PATENTSCHRIFT

(11) **EP 0 494 043 B1**
(45) Veröffentlichungstag und Bekanntmachung des Hinweises auf die Patenterteilung: **27.11.1996**
(21) Anmeldenummer: 91710054.7
(22) Anmeldetag: 21.12.1991
(51) Int. Cl.: E04B 7/14

(54) **Vorrichtung zum Beschatten von Flächen mit einer aufgespannten Dachhaut und an dieser vorgesehenen photovoltaischen Elementen**
Device for shading surfaces by means of a tensioned roofing membrane comprising photovoltaic elements
Dispositif pour donner de l'ombre à des surfaces au moyen d'une membrane de toiture tendue comportant des éléments photovoltaiques

(30) Priorität: 28.12.1990 DE 4042016
(43) Veröffentlichungstag der Anmeldung: 08.07.1992
(73) Patentinhaber: Webasto Systemkomponenten GmbH, 82131 Stockdorf (DE)
(72) Erfinder: Dorison, Andreas, W-8520 Erlangen (DE); Ganter, Hans-Peter, W-8600 Bamberg (DE); Schmid, Gerd, W-7750 Konstanz (DE); Wecker, Reinhard, W-8521 Möhrendorf (DE)
(74) Vertreter: Wiese, Gerhard

(56) Entgegenhaltungen:
- EP-A- 0 260 248
- EP-A- 0 373 234
- EP-A- 0 379 961
- DE-A- 3 427 574
- DE-B- 2 016 089
- US-A- 3 699 987

## Beschreibung

Die Erfindung betrifft eine Vorrichtung zum Beschatten von Flächen, insbesondere zum Beschatten begehbarer Plätze od.dgl., nach dem Oberbegriff des Patentanspruches 1.

Eine solche Vorrichtung mit auf der Dachhaut oder dem Seilnetz festgelegten und gegebenenfalls zueinander bewegbaren Siliziumkristallen beschreibt etwa die DE-OS 34 27 574. Unter photovoltaischen Elementen versteht man beispielsweise solare Zellen mit im Prinzip doppelschichtiger Halbleiterplatte, nämlich einer oberen negativ dotierten (beispielsweise Silizium mit Phosphor-Atomen) und einer unteren (Bor-Atomen) positiv dotierten Schicht. An einer zwischen den Schichten aufgebauten elektrischen Sperre entsteht eine Spannung - über Metallkontakte kann unmittelbar Gleichstrom entnommen werden, den man dann durch Inverter an das Stromnetz anpassen kann. Aus diesem Grunde sind solche photovoltaischen Elemente auch direkt an Stromleitungen angeschlossen.

Ein photovoltaisches Solarmodul ist gemäß DE-OS 31 42 129 durch ein verzinktes Eisendrahtgewebe oder Eisendrahtnetz verstärkt, das eine Lackschicht trägt und mit dem die Solarzelle umhüllenden Kunststoff -- unter Zwischenschaltung einer Mehrschichtfolie als Dampfdiffusionssperre -- verbunden ist. Im Kunststoff können ein Glasgewebe sowie die elektrischen Leitungen verlaufen. Dieses Solarmodul soll außerhalb des Bereiches seiner durch steifes Material hinterfütterten Solarzelle gekrümmten starren Flächen wie unebenem Boden, Autodächern, Felswänden, Hausfronten o.dgl. angepaßt werden können, diese Anpassung an die Krümmung erfolgt also formgebend ein einziges Mal, nämlich beim Auflegen. Für bewegte gekrümmte Flächen sind derartige Solarmodule ebenso ungeeignet wie photovoltaische Schichten aus amorphem Silizium oder aus Kadmiumderivaten nach US-PS 34 11 050.

Diese in Solarmodulen zusammengefaßten Elemente werden nach DE-OS 34 27 574 auf schwingende großflächige Überdachungssysteme aufgebracht. Aus den besonderen Gegebenheiten solcher als "Leichte Flächentragwerke" bezeichneten Bauten ergeben sich spezifische Anforderungen an die Befestigung der Solarmodule. Mit der IEC 504 der Kommission der Europäischen Gemeinschaft werden an die für den Einsatz von Solarmodulen geeigneten aufgeständerten Dachflächen folgende -- durch Schnee- und Windlast bedingte -- Eckwerte vorgegeben:
Sogkräfte 2400 N/m^ 2;
Druckkräfte 5400 N/m^2;
Scherungskräfte bei 60° - Anstellwinkel 5000
N/m^2.

Membranen aus netzartigen Geweben oder aber Seilnetzen, wie sie etwa die Überdachung des Olympiastadions in München anbietet, werden üblicherweise auf Stahlpylonen oder -masten punktartig aufgelegt und mittels verspannender sog. Absegelungen zur querschnittlich gekrümmten synklastischen oder antiklastischen Flächen gespannt. Sie erfahren trotz der in sie eingeleiteten Vorspannkräfte weitere leichte Dehnungen unter Schnee- und Windlasten und bewegen sich damit sozusagen atmend. Für die auftretenden Dehnungen können folgende Verhältnisse gelten:
- * Membrantragwerke: in Kettrichtung 1 - 3 %;
in Schußrichtung 1 - 5 %;
Winkelverstellung bis zu 10 Grad;
- ** Seilnetztragwerke: Dehnungen bis zu 1 %;
Winkelverstellung bis zu 10 %.

Somit müssen auf Leichte Flächentragwerke aufgebrachte starre Solarmodule mit einer Befestigungstechnik versehen sein, welche die beschriebenen Bewegungen ausgleichen können.

Mit dem Festlegen von Abdeckplatten auf Seilnetzen befaßt sich die DE-B-20 16 089. Es wird ein zwischen zwei Stahlplatten einvulkanisierter Kunstgummipuffer als sog. Schwingelement vorgeschlagen, in dessen Innerem eine Schraubenfeder auftretende Zugkräfte überträgt. Solche Schwingelemente sind rasterartig an der Abdeckplatte angeordnet. Die Kanten der Abdeckplatten sind durch aufgeklemmte Dichtstreifen verbunden, um eine durchgehende Oberfläche zu erzeugen.

Gegenüber diesem Stand der Technik hat sich der Erfinder das Ziel gesetzt, eine Vorrichtung der eingangs beschriebenen Art so zu verbessern, daß die photovoltaischen Solarmodule einerseits bezüglich der oben aufgeführten Kräfte gesichert sind, jedoch auch anderseits die durch die Aufständerung hervorqerufenen Verschiebungen aufzunehmen vermögen.

Es sollen starre -- aber auch flexible -- photovoltaische Elemente dauerhaft auf großflächigen leichten Flächentragwerken aufgebracht und dabei die Bewegungen der Unterkonstruktion durch eine spezifische Befestigungstechnik ausgeglichen werden können, um leichte Flächentragwerke in ihrem Anwendungsspektrum wesentlich zu erweitern. Im Idealfall leitet das Modul Kräfte in die Membrane, ohne selbst durch die Membranverformung belastet zu werden, d.h. der Weg zur Optimierung führt über eine Minimierung der durch die Aufständerung in die photovoltaischen Module eingeleiteten Kräfte.

Zur Lösung dieser Aufgabe führt die Lehre des Patentanspruches 1. Weitere vorteilhafte Ausgestaltungen sind den Unteransprüchen zu entnehmen.

Erfindungsgemäß ist das photovoltaische Element oder Solarmodul -- oder eine Gruppe von Solarmodulen -- an das Tragwerk durch Zwischenelemente angefügt, mit denen durch Dehnung verursachte Verzüge des Tragwerks aufnehmbar sowie Außenkräfte in das Tragwerk einleitbar sind, wobei die Zwischenelemente Teile einer Mehr-Punkt-Befestigung aus starren Verbindungen und diesen zugeordneten gleitbaren Verbindungen zwischen Solarmodul sowie Tragwerk sind.

Es wird also eine Befestigung von photovoltaischen Solarmodulen auf Leichten Flächentragwerken angeboten, welche die Dehnungen des Tragwerks aufzunehmen vermag, jedoch gleichzeitig die Schnee- und Windkräfte der applizierten Solarmodule in das Tragwerk ableitet.

Bevorzugt wird auf die jeweilige Modulrückseite ein weicher Kunststoffsockel adäquaten Durchmessers aufgegossen, dessen Shorehärte bei der Größe des Moduls von beispielsweise 500 x 1000 mm bevorzugt bei Shore A von 20 bis 30 liegt. Serienmäßige Verschraubungen der Solarmodule im Randbereich des Modulrahmens können hier nicht verwendet werden, da sich die Puffer bei einer sehr dichten Belegung gegenseitig behindern würden oder zueinander versetzt angeordnet werden müssen.

Die erwähnten Puffer werden erfindungsgemäß auf Seilnetzknoten eines großflächigen Seilnetzes aufgeschraubt oder aber mit einer großflächig gespannten Membrane verbunden.

Als günstig hat es sich erwiesen, an den -- serienmäßigen - - Rahmen der Solarmodule sogenannte Rutschklemmen anzuordnen sowie jeweils eine oder zwei der Befestigungen als starre, harte Verbindung auszuführen, um so durch die Kombination eines Festpunktes und mehrerer Gleitstellen die Bewegung der Unterkonstruktion gegenüber dem Solarmodul über die anderen Rutschklemmen auszugleichen.

Vorteilhafterweise kann eine Drei-Punkt-Befestigung verwendet werden, bei der ein starrer aufgeklebter Teller auf der Modulrückseite zwei Puffern oder zwei Rutschklemmen gegenübersteht. Durch den Fortfall eines vierten Befestigungspunktes ist ein Freiheitsgrad in den Bewegungen zulassenden Befestigungen nicht mehr notwendig; erst bei einer Vierpunktlagerung bedarf es eines Höhenausgleiches etwa durch eine Rutschklemme.

Bei Solarmodulen in der Größenordnung von etwa 500 x 1000 mm hat sich eine Zwei-Punkt-Befestigung bewährt, mit der das Solarmodul auf Seilnetzknoten oder auf einem Kettfaden eines Membrantragwerkes festgelegt wird; bei relativ starren Unterkonstruktionen ist damit ein Ausgleich von Bewegungen nicht mehr erforderlich. Die hier im Bereich der Solarmodule stattfindenden Bewegungen sind minimal.

Zur Festlegung des Solarmoduls an Seilnetzknoten können Laschen dienen, wobei eine der Befestigungen starr ist und die andere ausgleichende Bewegungen zuläßt.

Bei großflächig gespannten Membranen werden für die Einleitung der Befestigungskräfte Scheiben eingesetzt, beispielsweise mit flachen Metall- oder Kunststoffscheiben mit einer entsprechenden Verschraubung, welche die Membrane klemmen und damit ein Ausreißen eines gestanzten Loches verhindern.

Günstigerweise besitzen die Scheiben oder Klemmflächen reibungserhöhende rauhe Oberflächenstrukturen. Sie können auch dachförmig ausgeführte Teller sein, mit denen die Klemmung der Membrane im Randbereich des Tellers erfolgt.

Nach einem weiteren Merkmal der Erfindung können im Randbereich der Teller Nut und Feder angebracht sein, um auch so eine Klemmung der Membrane im Randbereich zu erreichen. Zudem ist es von Vorteil, in entsprechende Nuten des Randbereiches der Teller O-Ringe einzulegen, um eine verbesserte Klemmung der Membrane zu erreichen.

Durch die vorgegebene Ausgestaltung der Solarmodule können diese auf Seilnetzen bzw. Zeltmembranen nicht in einer Ebene plaziert werden. Es ergibt sich eine unterschiedliche Ausrichtung, wodurch die Solarmodule der Anlage unterschiedlich stark bestrahlt werden. Erfindungsgemäß wird nun die Ausgangsspannung durch eine Reihenschaltung von mehreren -- möglichst geographisch gleichgerichteten --Solarmodulen erhöht. Zur optimalen Ausnutzung eines Solargenerators muß der Arbeitspunkt immer im sog. Maximum Power Point (MPP) liegen.

Weiterhin besteht die Gefahr, daß das Regelsystem die Kennlinie im Bereich eines anderen Maximiums abtastet und den MPP-Punkt mit der max. Leistung nicht erreicht. Durch die erfindungsgemäße Wahl einer kleinen Anlagenspannung wird dies verhindert.

Im Rahmen der erfindungsgemäßen Lehre werden in einer photovoltaischen Anlage Solarmodule mit annähernd gleicher Ausrichtung zu Strängen zusammengeschaltet. Zudem soll die Anlage in Bereiche aufgeteilt und jedem Bereich ein eigener MPP-Regler zugeordnet werden. Dabei stellt sich der für jeden Bereich optimale Arbeitspunkt ein.

Durch die Aufteilung der räumlich gekrümmten bewegbaren Tragfläche in Bereiche kann die gesamte Anlage dem Sonnenverlauf angepaßt werden; vormittags arbeitet der Bereich mit östlicher Ausrichtung im optimalen Arbeitspunkt, während der Mittagszeit wird der mittlere Bereich optimal bestrahlt, und nachmittags liefert der nach Westen gerichtete Bereich die größte Leistung. Keiner dieser Bereiche wird von den anderen beeinflußt.

Die Ausgangsspannungen der einzelnen MPP-Regler können auf einen Wert festgelegt werden und somit einen gemeinsamen Verbraucher bzw. Batteriespeicher speisen. Ein herkömmlicher MPP-Regler besteht aus mehreren Leistungsteilen. Es wären also nur zusätzliche Regeleinheiten nötig.

Bei teilweise Beschattungen (durch Bäume, Gebäude usw.) würde nur der betreffende Bereich beeinflußt; die übrigen Bereiche arbeiten weiterhin im MPP-Punkt und liefern die maximale Leistung.

Erfindungsgemäß hat es sich gezeigt, daß eine derartige Anlage mit unterschiedlich ausgerichteten Solarmodulen dann als optimiert angesehen werden kann, wenn
die Anzahl der in Reihe geschalteten Solarmodule möglichst klein gehalten ist;
die Anlage in kleine parallele geschaltete Bereiche aufgeteilt wird, die den Sonnenverlauf berücksichtigen;
diese parallel geschalteten Bereiche durch MPP-Regelungen für jeden Bereich weitergehend optimiert werden.

Insgesamt wird mit der vorstehenden Lehre die Wirtschaftlichkeit von photovoltaischen Anlagen erheblich verbessert; diese ist nicht allein durch die Solarzellen und sekundären Komponenten der elektrischen Anlage bestimmt, sondern auch durch die Aufständerung der Solarmodule. Diese Aufständerung kann bis zu 30 % der Gesamtkosten einer Photovoltaik-Anlage ausmachen. Die in Seilnetzen applizierten Solarmodule können als kostengünstige Solarmodulaufständerung an sich gelten. Darüberhinaus vermag man bereits zu Modulen verschaltete und verkapselte Solarzellen mit den erfindungsgemäßen Befestigungssystemen anzubringen.

Die Solarmodule sind leicht flexibel aufgehängt, so daß hochfrequente Schwingungen, wie sie bei starren Befestigungen auf größeren Rahmen auftreten können, eleminiert werden. Die spezifischen Beschleunigungskräfte, die sich aus der ersten Ableitung der Schwingungsfrequenz ergeben, reduzieren sich damit um den Faktor 1 und werden durch die Solarmodule weiter gedämpft.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1 bis Fig. 4:: vier Graphiken mit unterschiedlichen Kennlinien;
- Fig. 5:: die Draufsicht auf ein Seilnetz als Dachfläche mit darauf angeordneten Solarmodulen in vier Gruppen;
- Fig. 6:: die Seitenansicht einer als Wellenarkade aufgespannten Dachhaut;
- Fig. 7:: die Draufsicht auf Fig. 6 mit auf der Dachhaut vorgesehenen Solarmodulen in drei Gruppen;
- Fig. 8:: eine Seitenansicht zu Fig. 6, 7 (um 90° gedreht);
- Fig. 9, 10:: vergrößerte Details aus Seilnetzen im Schnitt mit einem Teil eines Solarmoduls;
- Fig. 11:: ein vergrößertes Detail aus einer Dachhaut im Schnitt;
- Fig. 12:: die Draufsicht auf ein Solarmodul;
- Fig. 13:: einen Schnitt durch einen Teil einer Dachhaut;
- Fig. 14:: eine Anordnung zweier Solarmodule in Draufsicht.

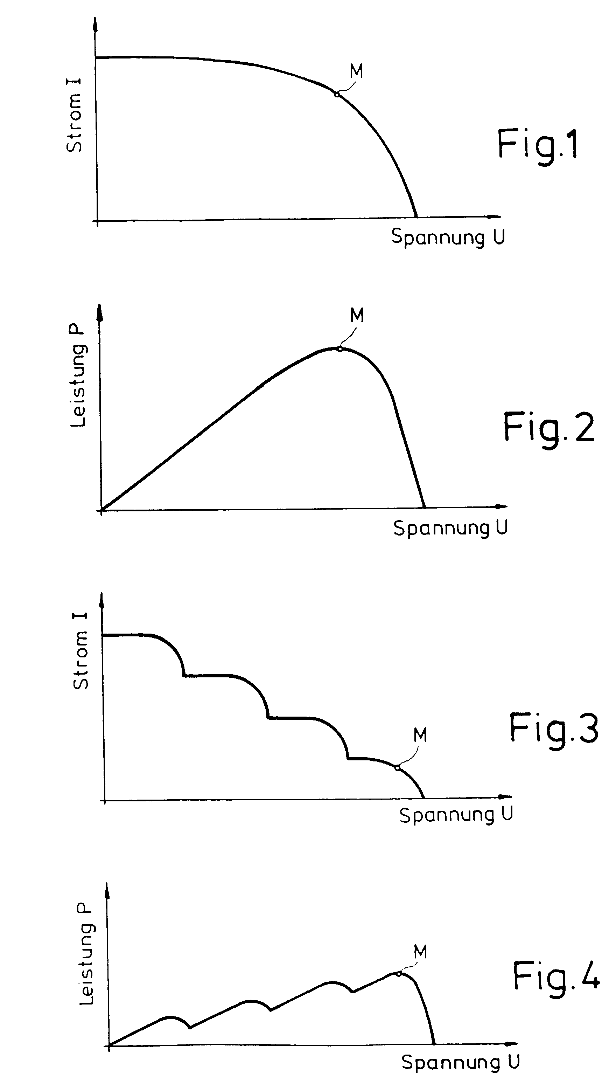

Fig. 1 zeigt in einem ebenen Koordinatensystem mit der Ordinate I (= elektrische Stromstärke) über der Abszisse U (= elektrische Spannung) die Gesamtkennlinie einer Gruppe von gleichmäßig ausgerichteten Solarmodulen. Mit M ist der sog. Maximum Power Point (= MPP) bezeichnet.

In Fig. 2 ist über der elektrischen Spannung U die Leistung P für gleichmäßig ausgerichtete Solarmodule aufgetragen mit dem Punkt M im Kurvenmaximum; dieser ist bei optimaler Ausnutzung des Solargenerators die Lage des Arbeitspunktes für die verstellbaren Solarmodule. Dazu tastet ein nicht dargestelltes Regelsystem eines MPP-Reglers die Kennlinie des Solargenerators ab. Aus den jeweiligen Strom- und Spannungswerten wird die Leistung errechnet. Ist die Leistung beim nächsten abgetasteten Punkt größer, wird die Abtastrichtung beibehalten; ist sie kleiner, wird in die Gegenrichtung abgetastet und so der MPP-Punkt gefunden sowie festgehalten.

Die der Darstellung in Fig. 1 entsprechende Gesamtkennlinie für unterschiedlich ausgerichtete Solarmodule zeigt Fig. 3; in diesem Falle wird die Gesamtkennlinie verformt. Im MPP-Punkt dieser Zusammenschaltung ist die Leistung kleiner als bei gleichmäßig ausgerichteten Solarmodulen, was der Leistungsverlauf der Fig. 4 verdeutlicht.

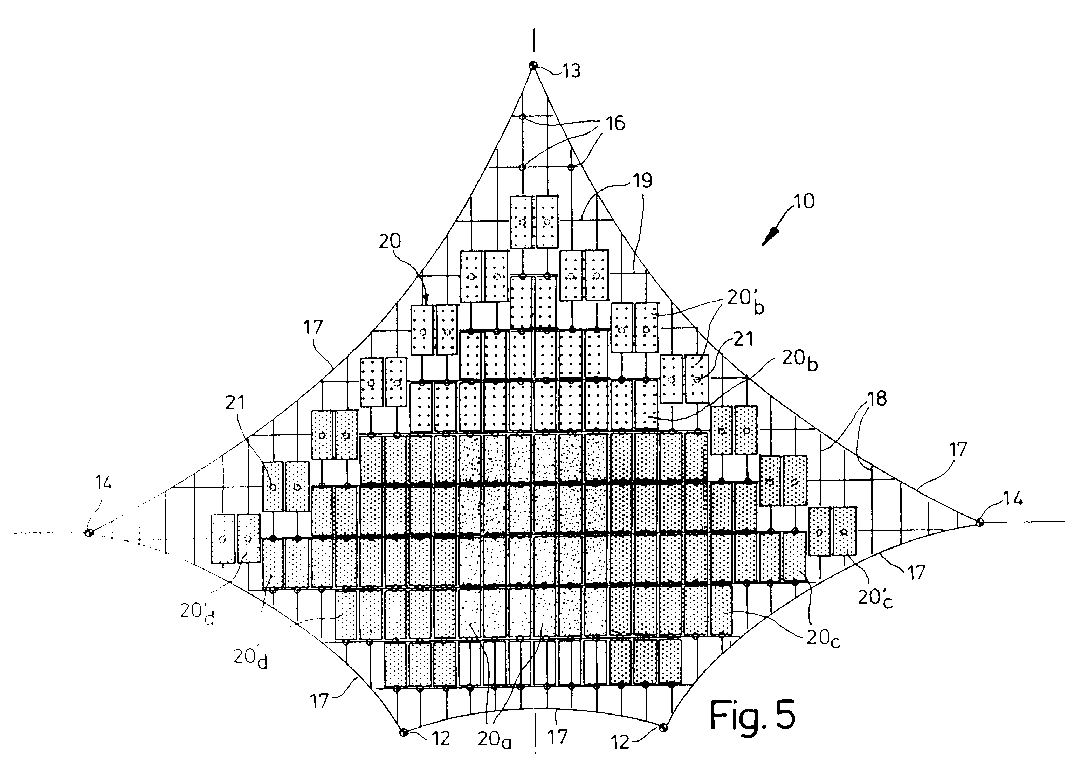

Um Kennlinien nach den Fig. 1, 2 zu erzielen, sind gemäß Fig. 5 auf einem -- zwischen zwei Hochpunkten 12, einem Hochpunkt 13 größeren Bodenabstandes und zwei Tiefpunkten 14 -- gekrümmten aufgspannten Seilnetz 10 an Seilnetzknoten 16 Solarmodule 20 festgelegt. Die Lage dieser Seilnetzknoten 16, von denen nur einige wenige erkennbar sind, wird von sich innerhalb von Randseilen 17 kreuzenden Innenseilen 18, 19 bestimmt.

Die Solarmodule 20 sind jeweils in Bereiche 20ₐ bis 20_{d} zusammengefaßt, wobei der zentrale Bereich 20ₐ -- und großteils auch der Bereich 20_{b} -- zum Zenit weist, somit vor allem Mittagssonne empfängt. Hingegen sind die Bereiche 20_{c} bzw. 20_{d} hier mehr dem Osten bzw. dem Westen zugeordnet, nehmen also Morgen- bzw. Abendsonne auf. Die den Randseilen 17 zwischen den Spannpunkten 13 und 14 benachbarten Solarmodule 20′_{b}, 20′_{c}, 20′_{d} sind mittels zentrischer Verbindungsglieder 21 an die Seilnetzknoten 16 angeschlossen, die anderen Solarmodule 20ₐ bis 20_{d} jeweils einem von vier Seilnetzknoten 16 bestimmten Maschenfeld zugeordnet, d.h. die Schmalseiten ihrer -- in Fig. 5 nicht verdeutlichten -- Modulrahmen verlaufen hier oberhalb der Innenseite 19 und liegen jeweils mit der Längsachse auf einem Seilnetzknoten 16.

Nicht erkennbar sind auch jeweils zumindest vier Solarmodule 20 eines Bereiches untereinander verbindende Stromleitungen und deren Anschlüsse an einen Stromaufnehmer.

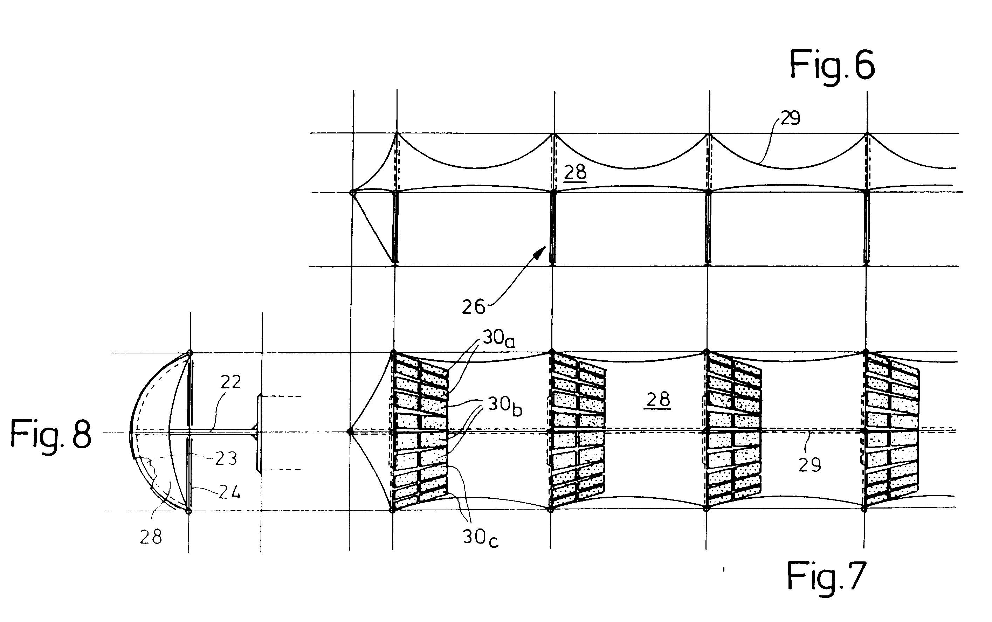

Sowohl bei dieser als auch bei einer weiteren Anlage nach Fig. 6 bis 8 ist eine Arbeitsspannung von 48 V festgelegt, wozu immer vier Solarmodule 20 in Reihe geschaltet sind.

Eine sog. Wellenarkade nach Fig. 6 bis 8 besteht aus einem -- vertikale Ständer 22 und Spannbogen 23 an Horizontalträgern 24 enthaltenden -- Traggerüst 26 und einer daran aufgespannten Dachhaut 28, die eine kettenlinienartige Kammlinie 29 bildet. Auf dieser Dachhaut 28 sind auf der nach Süden gerichteten Seite des Spannbogens 23 Solarmodule 30 in drei Gruppen 30ₐ, 30_{b}, 30_{c} angeordnet, von denen die mittlere Gruppe 30_{b} vor allem mittags mit Sonnenenergie beaufschlagt ist, die flankierenden Gruppen 30ₐ bzw. 30_{c} aber vor Mittag bzw. nachmittags.

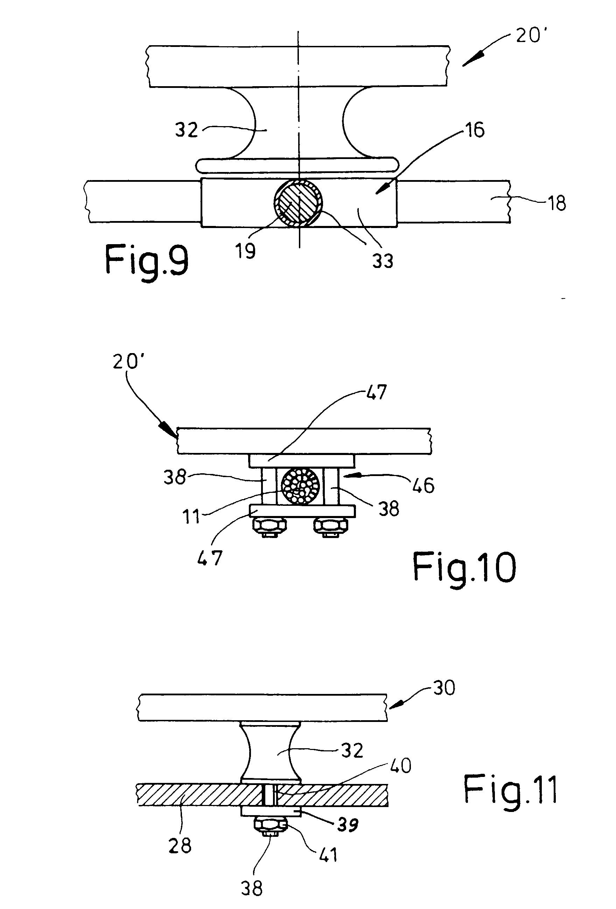

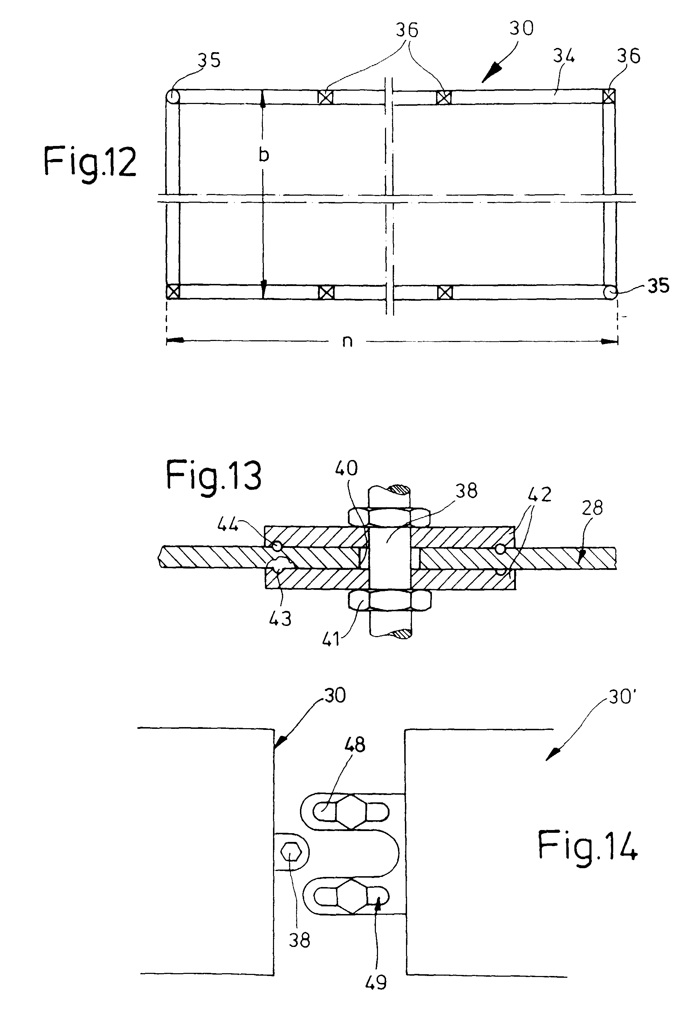

Das Solarmodul 20′ der Fig. 9 kann am Seilnetz 10 beispielsweise durch einen Kunststoffsockel 32 festgelegt werden, der an Hülsen 33 des Seilnetzknotens 16 angeschraubt wird und als Puffer wirkt. Dessen Shorehärte beträgt beispielsweise für ein Solarmodul 20 der Länge n von 1000 mm und der Breite b von 500 mm gemäß Fig. 12 etwa 20 bis 30 (Shore A).

Fig. 10 zeigt ein Solarmodul 20′ auf einem Seil 11 eines Seilnetzes 10; sie ist am Seil 11 durch eine Seilklemme 46 mit beidseits des Seiles 11 angebrachten, durch Schrauben 38 verbundene Klemmplatten 47 festgelegt. Diese Klemmverbindung 11/46 rutscht ab einer auf das Solarmodul 20′ einwirkenden definierten Kraft.

Um Scherkräfte aufnehmen zu können, soll einer der Befestigungspunkte starr sein, wohingegen die anderen Befestigungspunkte nur Druck- oder Sogkräfte aufnehmen. Durch die Kombination fester Punkte mit gleitenden Bereichen -- an Seil- oder Rutschklemmen 46 -- erfolgt ein Ausgleich der Bewegungen der Unterkonstruktion 10, 28 gegenüber dem Solarmodul 20, 30.

Der Solarmodul 30 nach Fig. 11 ist unter Zwischenschaltung oben beschriebener Kunststoffsockel 32 auf einer membranartigen Dachhaut 28 mittels Schrauben 38 festgelegt, die ausgestanzte Löcher 40 sowie Unterlegplatten 39 durchsetzen und über eine Mutter 41 angezogen werden können.

So kann ein Modulrahmen 34 des in Fig. 12 in Draufsicht gezeigten Solarmoduls 30 an den Stellen 35 mit der hier nicht gezeigten tragenden Dachhaut 28 fest verbunden, an Stellen 36 hingegen durch Rutschklemmen verschieblich gelagert sein.

Die Festlegung eines Solarmoduls 30 an der Dachhaut 28 durch eine Schraube 38 gibt skizzenhaft auch Fig. 13 wieder; die Dachhaut 28 wird um das von der Schraube 38 durchsetzte Loch 40 beidseits von zwischen den Muttern 41 liegenden Klemmplatten 42 gehalten, welche in Nuten 43 O-Ringe 44 aufnehmen.

Schließlich läßt Fig. 14 zwei benachbarte Solarmodule 30, 30′ erkennen, von denen der linke mit eine fixierenden Schraube 38 sowie der rechte mit einer Langlöcher 48 anbietenden Rutschklemme 49 ausgestattet ist.

## Patentansprüche

1. Vorrichtung zum Beschatten von Flächen, insbesondere zum Beschatten begehbarer Plätze od. dgl., mit zumindest einer auf Stützen od. dgl. Tragelementen in Abstand zu der zu beschattenden Fläche aufgespannten Dachhaut oder einem entsprechenden großflächigen Seilnetz als Tragwerk, an deren/dessen Außenseite photovoltaische Elemente vorgesehen und an elektrische Ableitungen angeschlossen sind,
dadurch gekennzeichnet,
daß das photovoltaische Element oder Solarmodul (20,30) oder eine Gruppe (20ₐ bis 20_{d},30ₐ bis 30_{c}) von Solarmodulen an das Tragwerk (10,28) durch Zwischenelemente angefügt ist, mit denen durch Dehnung verursachte Verzüge des Tragwerks aufnehmbar sowie Außenkräfte in das Tragwerk einleitbar sind, wobei wenigstens eines der Zwischenelemente als starre, harte Verbindung (35) ausgeführt ist und die anderen Befestigungspunkte (36) ausschließlich Druck- oder Sogkräfte aufnehmend ausgebildet sind, wobei dort die Bewegungen des Tragwerkes (10,28) über Seil- oder Rutschklemmen (46,49) ausgleichbar sind.

2. Vorrichtung nach Anspruch 1, gekennzeichnet durch eine Drei-Punkt-Befestigung des Solarmoduls (20,30) mit einem auf die Modulrückseite starr aufgeklebten Teller und Puffer (32) sowie zwei Seil- oder Rutschklemmen (36,49) oder durch eine Zwei-Punkt-Befestigung des Solarmoduls (20,30) für den Seilnetzknoten (16) des Seilnetzes (10) bzw. einen Kettfaden der Dachhaut (28).

3. Vorrichtung nach Ansprüch 1 oder 2, dadurch gekennzeichnet, daß das Zwischenelement ein Puffer (32) in Form eines weichen Kunststoffsockels ist mit einer Shore-A-Härte zwischen etwa 20 und 30.

4. Vorrichtung nach Anspruch 2 oder 3, dadurch gekennzeichnet, daß der Puffer (32) auf einen Seilnetzknoten (16) des Seilnetzes (10) oder die Dachhaut (28) aufgeschraubt ist.

5. Vorrichtung nach Ansprüch 1 oder 2, gekennzeichnet durch Laschen als an den Seilnetzknoten (16) festgelegte Zwischenelemente, wobei eine der Laschenbefestigungen starr ist und an der anderen relative Bewegungen zwischen Solarmodul (30,30') und Tragwerk (10,28) ausführbar sind.

6. Vorrichtung nach einem der Ansprüche 1 bis 5, gekennzeichnet durch auf der großflächig gespannten Dachhaut (28) für die Einleitung der Befestigungskräfte verschraubte Scheiben (42) beidseits eines in die Dachhaut eingebrachten Durchbruches oder Loches (40), wobei gegebenenfalls die Schraube (38) flache Metall- oder Kunststoffscheiben (42) durchsetzt, deren Klemmflächen bevorzugt rauhe Oberflächenstrukturen aufweisen.

7. Vorrichtung nach Anspruch 6, dadurch gekennzeichnet, daß die Scheibe (42) querschnittlich dachförmig ausgebildet und die Klemmung der Dachhaut (28) im Randbereich der Scheibe eingeleitet ist.

8. Vorrichtung nach Anspruch 6 oder 7, dadurch gekennzeichnet, daß im Randbereich der Scheibe (42) O-Ringe (44) vorgesehen, bevorzugt in Nuten eingelegt, sind, und/oder daß die Scheibe (42) im Randbereich Nut und Feder aufweist.

9. Vorrichtung nach Anspruch 1 und/oder einem der folgenden Ansprüche, dadurch gekennzeichnet, daß mehrere photovoltaische Elemente oder Solarmodule (20,30) etwa gleicher Ausrichtung in Reihe geschaltet und mit einem Regelsystem verbunden sind.

10. Vorrichtung nach Anspruch 9, dadurch gekennzeichnet, daß Solarmodule (20,30) etwa gleicher Ausrichtung jeweils einem Bereich (20ₐ bis 20_{d}; 30ₐ bis 30_{c}) zugeordnet und letztere von der Einfallsrichtung des aufzunehmenden Sonnenlichtes in Abhängigkeit vom Sonnenstand bestimmt sind.

11. Vorrichtung nach Anspruch 9 oder 10, dadurch gekennzeichnet, daß die Bereiche (20ₐ bis 20_{d}; 30ₐ bis 30_{c}) parallel geschaltet sind, und/oder daß wenigstens vier Solarmodule (20,30) zu einer Gruppe in Reihe geschaltet sind, wobei die Arbeitsspannung bevorzugt etwa 48 V beträgt.

12. Vorrichtung nach einem der Ansprüche 9 bis 11, gekennzeichnet durch die Zuordnung eines MPP-Reglers zu einer Gruppe oder einem Bereich.

13. Vorrichtung nach einem der Ansprüche 9 bis 12, dadurch gekennzeichnet, daß die Ausgangsspannungen der MPP-Regler auf einem Wert festgelegt sind und einen gemeinsamen Speicher speisen.

## Claims

1. A device for shading surfaces, particularly for shading squares or the like where people can walk, with at least one roof skin stretched on supports or like carrying elements at a distance from the surface which is to be shaded or with a corresponding large-area network of cables as a supporting mechanism on the outside of which there are photovoltaic elements which are connected to electrical branched lines, characterised in that the photovoltaic element or solar module (20, 30) or group (20ₐ to 20_{d}, 30ₐ to 30_{c}) of solar modules are connected to the carrier mechanism (10, 28) by intermediate elements with which distortions of the carrier mechanism occasioned by stretching can be accommodated and also external forces can be introduced into the carrier mechanism, whereby at least one of the intermediate elements is constructed as a rigid hard connection (35) while the other fixing points (36) are constructed solely to accommodate pressure or suction forces whereby movements of the supporting mechanism (10, 28) can be compensated by cable or sliding clamps (46, 49).

2. A device according to Claim 1, characterised by a three-point fixing of the solar module (20, 30) with a plate and cushioning piece (32) glued onto the back of the module and two cable or sliding clamps (36, 39) or by a two-point fixing of the solar module (20, 30) for the cable network nodal point (16) of the cable network (10) or a warp thread of the roof skin (28).

3. A device according to Claims 1 or 2, characterised in that the intermediate element is a cushioning piece (32) in the form of a soft synthetic plastics pedestal having a Shore A hardness of between about 20 and 30.

4. A device according to Claim 2 or 3, characterised in that the cushioning piece (32) is screwed onto a cable network nodal point (16) in the cable network (10) or the roof skin (28).

5. A device according to Claims 1 or 2, characterised by lugs serving as intermediate elements fixed at the cable network nodal points (16), one of the lug fixings being rigid while relative movements between solar module (30, 30') and supporting mechanism (10, 28) are possible at the others.

6. A device according to one of Claims 1 to 5, characterised by discs (42) which for introducing fixing forces are screwed onto the large-area taut roof skin (28), the discs being provided on both sides of an aperture or hole (40) incorporated into the roof skin whereby if necessary the screw (38) traverses flat metal or synthetic plastics discs (42) of which the clamping surfaces preferably have a rough surface texture.

7. A device according to Claim 6, characterised in that the disc (42) is of roof-shaped cross-section, clamping of the roof skin (28) being introduced in the marginal part of the disc.

8. A device according to Claim 6 or 7, characterised in that in the marginal area of the disc (42) there are O-rings (44) which are preferably inserted in grooves and/or in that the disc (42) has a tongue and groove in the marginal area.

9. A device according to Claim 1 and/or one of the subsequent Claims, characterised in that a plurality of photovoltaic elements or solar modules (20, 30) are arranged in series in substantially the same orientation and are connected to a control system.

10. A device according to Claim 9, characterised in that solar modules (20, 30) of substantially the same orientation are in each case associated with an area (20ₐ to 20_{d}; 30ₐ to 30_{c}), these latter being determined by the direction of incidence of the sunlight which has to be accommodated, as a function of the height of the sun.

11. A device according to Claim 9 or 10, characterised in that the areas (20ₐ to 20_{d}; 30ₐ to 30_{c}) are connected in parallel and/or in that at least four solar modules (20, 30) are connected in series to form one group, the working voltage preferably being about 48 volts.

12. A device according to one of Claims 9 to 11, characterised by the fact that one MPP regulator is associated with a group or an area.

13. A device according to one of Claims 9 to 12, characterised in that the output voltages of the MPP regulators are fixed at a level and feed a common storage means.

## Revendications

1. Dispositif pour donner de l'ombre à des surfaces, en particulier pour donner de l'ombre à des places se prêtant à la circulation ou analogues, avec au moins une couverture de toit tendue sur des appuis ou des éléments de support analogues à une certaine distance de la surface destinée à recevoir de l'ombre ou avec un réseau de câbles présentant une grande surface correspondante comme ossature porteuse, sur le côté extérieur duquel ou de laquelle sont prévus des éléments photovoltaïques, qui sont raccordés à des dérivations électriques, dispositif
caractérisé en ce que
l'élément photovoltaïque ou le module solaire (20, 30) ou un groupe (20a à 20d, 30a à 30c) de modules solaires est joint par des éléments intermédiaires, à l'ossature porteuse (10, 28) avec lesquels on peut absorber les étirages de l'ossature porteuse, causées par la dilatation et on peut introduire des forces extérieures dans l'ossature porteuse, en ce que l'un au moins des éléments intermédiaires est réalisé sous la forme d'une liaison rigide dure (35) et les autres points de fixation (36) sont constitués de façon à recevoir exclusivement des forces de pression ou de succion, les mouvements de l'ossature porteuse (10, 28) pouvant être équilibrés à cet endroit au moyen de pinces de câbles ou de pinces à friction (46, 49).

2. Dispositif selon la revendication 1,
caractérisé par
une fixation à trois points du module solaire (20, 30) avec un disque et un tampon (32) collé rigidement sur le verso du module et deux pinces à câbles ou pinces à friction (46, 49) ou par une fixation à deux points du module solaire (20, 30) pour le noeud (16) du réseau de câbles (10) ou un fil de chaîne de la couverture du toit (28).

3. Dispositif selon la revendication 1 ou 2,
caractérisé en ce que l'élément intermédiaire est un tampon (32) ayant la forme d'un socle en matière plastique souple avec une dureté shore A comprise entre environ 20 et 30.

4. Dispositif selon la revendication 2 ou 3,
caractérisé en ce que
le tampon (32) est vissé sur un noeud (16) du réseau de câbles (10) ou sur la couverture du toit (28).

5. Dispositif selon la revendication 1 ou 2,
caractérisé par
des colliers servant d'éléments intermédiaires fixés sur les noeuds (16) du réseau de câbles, l'une des fixations par collier étant rigide et des mouvements relatifs pouvant être exécutés sur les autres entre le module solaire (30, 30') et l'ossature porteuse (10, 28).

6. Dispositif selon l'une des revendications 1 à 5,
caractérisé par
des disques (42) vissés sur la couverture du toit (28) tendue en couvrant pour l'introduction des forces de fixation des deux côtés d'un ajour ou trou (40) pratiqué dans la couverture du toit, la vis (38) le cas échéant passant à travers des rondelles (42) métalliques ou en matière plastique, dont les surfaces de serrage présentent de préférence des structures superficielles rugueuses.

7. Dispositif selon la revendication 6,
caractérisé en ce que
la rondelle (42) est constituée en section transversale en forme de toit et on procède au serrage de la couverture du toit (28) dans la zone du bord de la rondelle.

8. Dispositif selon la revendication 6 ou 7,
caractérisé en ce que
dans la zone du bord de la rondelle (42) il est prévu des joints toriques (44) qui sont introduits de préférence dans des rainures et/ou en ce que la rondelle (42) présente dans la zone de bordure une rainure et un ressort.

9. Dispositif selon la revendication 1 et/ou l'une des revendications suivantes,
caractérisé en ce que
plusieurs éléments photovoltaïques ou modules solaires (20, 30) ayant à peu près la même orientation sont montés en série et sont reliés à un système de régulation.

10. Dispositif selon la revendication 9,
caractérisé en ce que
des modules solaires (20, 30) ayant à peu près la même orientation sont associés respectivement à une zone (20a à 20d ; 30a à 30c) et que ces derniers sont déterminés par la direction d'incidence de la lumière du soleil à recueillir en fonction de la position du soleil.

11. Dispositif selon la revendication 9 ou 10,
caractérisé en ce que
les zones (20a à 20d ; 30a à 30c) sont montées en parallèle et/ou en ce qu'au moins quatre modules solaires (20, 30) sont montés en série pour former un groupe, la tension de fonctionnement atteignant de préférence environ 48V.

12. Dispositif selon l'une des revendications 9 à 11,
caractérisé par
l'association d'un régulateur MPP à un groupe ou à une zone.

13. Dispositif selon l'une des revendications 8 à 12,
caractérisé en ce que
les tensions de sortie du régulateur MPP sont déterminées sur une valeur et alimentant un accumulateur commun.
